# EUROPEAN PATENT APPLICATION

(11) **EP 4 366 131 A1**
(43) Date of publication of application: **08.05.2024**
(21) Application number: 22832718.5
(22) Date of filing: 06.06.2022
(51) Int. Cl.: H02J 50/20, H02J 50/40, H02J 50/80

(54) **ELECTRONIC DEVICE, POWER TRANSMISSION SYSTEM, CONTROL METHOD, AND CONTROL PROGRAM**

(30) Priority: 29.06.2021 JP 2021107973
(71) Applicant: Kyocera Corporation, Kyoto-shi Kyoto 612-8501 (JP)
(72) Inventor: KAWAI, Katsutoshi, Kyoto-shi, Kyoto 612-8501 (JP); TANAKA, Yuuya, Kyoto-shi, Kyoto 612-8501 (JP); NAKASHA, Tomoyuki, Kyoto-shi, Kyoto 612-8501 (JP)
(74) Representative: Viering, Jentschura & Partner mbB Patent- und Rechtsanwälte
(86) International application number: PCT/JP2022/022731
(87) International publication number: WO 2023/276560

(57) **Abstract**

An electronic device according to an aspect includes: a transmitter (13) that transmits a power feeding radio wave; a receiver (14) that receives a regulation signal included in a radio wave transmitted from a power reception device moving relative to the receiver; a storage (15) that stores transmission weight information calculated when a movement of the power reception device includes a speed equal to or less than a predetermined speed; and a controller (16) that selects, when the power reception device moves at a speed higher than the predetermined speed, the transmission weight information of the power feeding radio wave based on the stored transmission weight information.

## Description

### TECHNICAL FIELD

The present application relates to an electronic device, a power transmission system, a control method, and a control program.

### BACKGROUND OF INVENTION

For example, some electronic devices movable by a movable body use wireless power feeding. Patent Document 1 discloses a system that performs control relating to wireless power feeding between a first wireless device having a directional antenna and a second wireless device driven by a power feeding radio wave from the first wireless device.

### CITATION LIST

### PATENT LITERATURE

Patent Document 1: JP 6337797 B

### SUMMARY

### PROBLEM TO BE SOLVED

In the related art, for example, the influence of fading due to the influence of an object existing between wireless devices is suppressed. However, when power is fed to a power reception device provided in a movable body, causing the power reception device to follow a power feeding radio wave is difficult. Therefore, the related art has room for improvement in supplying stable power to a moving power reception side in wireless power feeding.

### SOLUTION TO PROBLEM

According to an aspect, an electronic device is provided that includes: a transmitter that transmits a power feeding radio wave; a receiver that receives a regulation signal included in a radio wave transmitted from a power reception device moving relative to the receiver; a storage that stores transmission weight information calculated when a movement of the power reception device includes a speed equal to or less than a predetermined speed; and a controller that selects, when the power reception device is moving at a speed higher than the predetermined speed, the transmission weight information of the power feeding radio wave based on the transmission weight information that is stored.

According to an aspect, a power transmission system is provided that includes: an electronic device; and a power reception device that is moved by a moving device and fed with electrical power by a power feeding radio wave received from the electronic device. The electronic device includes: a transmitter that transmits the power feeding radio wave; a receiver that receives a regulation signal included in a radio wave transmitted from the power reception device moving relative to the receiver; a storage that stores transmission weight information calculated when a movement of the moving device includes a speed equal to or less than a predetermined speed; and a controller that selects, when the power reception device is moving at a speed higher than a predetermined speed, the transmission weight information of the power feeding radio wave based on the transmission weight information that is stored. The power reception device includes: a power reception controller that transmits the regulation signal and converts the power feeding radio wave received from the electronic device into electrical power; and a battery that is charged with the electrical power that is converted.

According to an aspect, a control method is provided that is executed by an electronic device, the electronic device including: a transmitter that transmits a power feeding radio wave; and a receiver that receives a regulation signal included in a radio wave transmitted from a moving device moving relative to the receiver. The electronic device executes: storing, in a storage, transmission weight information calculated when a movement of the moving device includes a speed equal to or less than a predetermined speed; and selecting, when the moving device is moving at a speed greater than the predetermined speed, the transmission weight information of the power feeding radio wave based on the transmission weight information that is stored.

According to an aspect, a control program is provided that causes an electronic device to execute: storing, in a storage, transmission weight information calculated when a movement of a moving device includes a speed equal to or less than a predetermined speed; and selecting, when the moving device is moving at a speed greater than the predetermined speed, the transmission weight information of a power feeding radio wave based on the transmission weight information that is stored. The electronic device includes a transmitter that transmits the power feeding radio wave; and a receiver that receives a regulation signal included in a radio wave transmitted from the moving device moving relative to the receiver.

### BRIEF DESCRIPTION OF THE DRAWINGS

FIG. 1 is a diagram illustrating an overview of a system that performs wireless power transmission using an electronic device according to an embodiment.
FIG. 2 is a diagram illustrating an example of a configuration of a power transmission device according to an embodiment.
FIG. 3 is a diagram illustrating an example of a configuration of a power reception device according to an embodiment.
FIG. 4 is a diagram illustrating an example of a configuration of a wireless communication device according to an embodiment.
FIG. 5 is a diagram for illustrating an example of a movement of the power reception device by a rotation body according to an embodiment.
FIG. 6 is a diagram illustrating an example of weight data indicating a relationship between a reception response vector and transmission weight information.
FIG. 7 is a diagram illustrating an example of weight data corresponding to a relationship between a position of the power reception device rotating at a first rotation speed and a power distribution during power transmission.
FIG. 8 is a diagram for illustrating an example of weight data corresponding to a relationship between a position of the power reception device rotating at a second rotation speed and a power distribution during power transmission.
FIG. 9 is a flowchart illustrating an example of a processing procedure executed by the power transmission device according to an embodiment.
FIG. 10 is a diagram illustrating an example of a sequence of the system according to an embodiment.
FIG. 11 is a diagram illustrating another example of an operation of the system according to an embodiment.

### DESCRIPTION OF EMBODIMENTS

A plurality of embodiments for implementing an electronic device, a power transmission system, a control system, a control program, and the like according to the present application will be described in detail with reference to the drawings. Note that the present application is not limited by the following description. Constituent elements in the following description include those that can be easily assumed by a person skilled in the art, those that are substantially identical to the constituent elements, and those within a so-called range of equivalents. In the following description, the same reference signs may be assigned to the same constituent elements. Redundant description may be omitted.

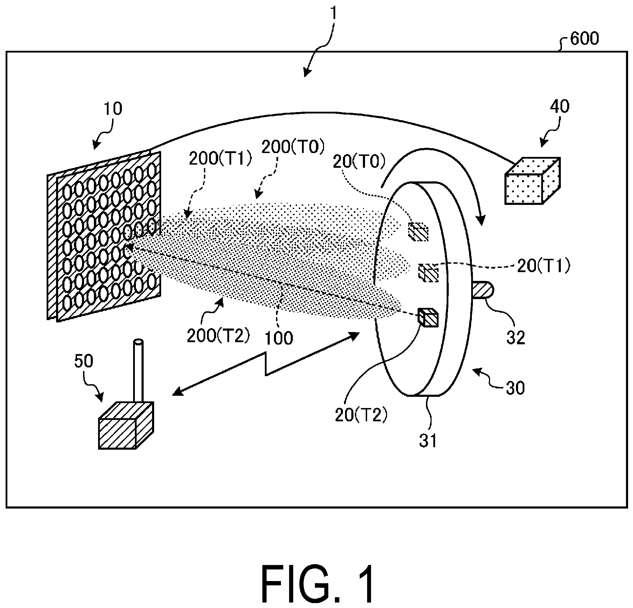

FIG. 1 is a diagram illustrating an overview of a system that performs wireless power transmission using an electronic device according to an embodiment. A system 1 illustrated in FIG. 1 includes, for example, a wireless power transmission system capable of wireless power transmission of a microwave transmission type (space transmission type). Wireless power transmission is a mechanism capable of transmitting power without using, for example, a cable or a plug. Since the system 1 of a microwave transmission type uses radio waves (microwaves) for energy transmission, the system 1 uses an unmodulated wave having a narrow frequency bandwidth. The system 1 transmits power in, for example, a plurality of frequency bands. The plurality of bands include, for example, 920 MHz, 2.4 GHz, and 5.7 GHz in Japan. In the present embodiment, the system 1 can achieve both improving power feeding efficiency and ensuring safety adapted to the situation. The system 1 can be applied to, for example, space photovoltaic power generation.

In the example illustrated in FIG. 1, the system 1 includes a power transmission device 10 and a power reception device 20. The power transmission device 10 and the power reception device 20 are provided in a closed space 600. Each device such as the power transmission device 10 constituting the system 1 may be included in an aspect of the electronic device according to the present embodiment. The closed space 600 includes, for example, a space in which a moving device 30 is provided. The moving device 30 is provided with the power reception device 20 and moves the power reception device 20. In the example illustrated in FIG. 1, the moving device 30 includes a rotation body 31 and a rotation axis 32. The rotation body 31 is formed in a disk shape. When the rotation axis 32 is rotated by a drive device (not illustrated), the rotation body 31 fixed to one end side is rotated. The moving device 30 rotates the rotation body 31 to cause the power reception device 20 to perform a rotational motion. That is, the moving device 30 changes the position of the power reception device 20 by rotating the rotation body 31. In the system 1, the power transmission device 10 is on a non-rotating side and the power reception device 20 is on a rotating side. Note that the system 1 may be used in an open space. The moving device 30 may include a component such as a turning device, a drilling device, a milling device, a machining center, an NC machine tool, a computerized numerical control (CNC) machine tool, or the like.

The power transmission device 10 wirelessly transmits power in the system 1. The power transmission device 10 can transmit power feeding radio waves to the power reception device 20. The power transmission device 10 is provided in the closed space 600 so that a radiated power feeding radio wave is directed to a moving range of the power reception device 20. The power transmission device 10 is an example of an electronic device.

The power reception device 20 is a power-fed device that receives a power feeding radio wave and obtains power in the system 1. Examples of the power reception device 20 include various devices whose positions are changed by the moving device 30, such as an Internet of Things (IoT) sensor, a smartphone, a tablet terminal, a notebook personal computer, a drone, an electric vehicle, an electric bicycle, and a game machine. In the present embodiment, a case where the power reception device 20 is an IoT sensor will be described.

In the example illustrated in FIG. 1, the power reception device 20 moves on a circumferential orbit along the edge of the rotation body 31 in the order of an index T0, an index T1, and an index T2 through the rotation of the rotation body 31. The index includes, for example, time, position, and angle. In FIG. 1, the power reception device 20 moves at the position of the index T2, and the position of the index T0 and the position of the index T1 indicate positions where the power reception device 20 existed in the past. The power reception device 20 transmits a regulation signal 100 determined between the power reception device 20 and the power transmission device 10. The regulation signal 100 includes, for example, a beacon, and a pilot signal. The power reception device 20 can transmit the regulation signal 100 at a preset transmission period, for example. The power reception device 20 can transmit the regulation signal 100 by radiating radio waves including the regulation signal 100.

The power transmission device 10 is electrically connected to a rotation sensor 40. The rotation sensor 40 can detect, for example, a rotation speed, a rotation amount, the presence or absence of rotation of the rotation body 31, and supply a detection result to the power transmission device 10. The power transmission device 10 estimates a movement amount, a movement position, and the like of the power reception device 20 based on a detection result of the rotation sensor 40.

Upon receiving the regulation signal 100 from the power reception device 20, the power transmission device 10 estimates a reception response vector of the power reception device 20 based on the regulation signal 100. The reception response vector is obtained by vectorizing channel characteristics of propagation paths calculated at the time of reception by a plurality of antenna elements 11A by arranging the channel characteristics as many as the number of the plurality of antenna elements 11A, and takes different values depending on the direction of arrival and a reflection of radio waves. The transmission path includes a space through which radio waves are transmitted between the power transmission device 10 and the power reception device 20. Based on the estimated reception response vector of the power reception device 20 and the rotation state of the rotation body 31, the power transmission device 10 selects a transmission weight (weight coefficient) of the power feeding radio wave for the moved power reception device 20. The transmission weight is directivity information of an antenna 11. The transmission weight information is, for example, information indicating a transmission weight vector for generating a signal having directivity to a specific power reception device 20. The power transmission device 10 selects transmission weight information corresponding to the movement speed of the power reception device 20 from a plurality of pieces of transmission weight information, and radiates a power feeding radio wave 200 based on the transmission weight indicated by the transmission weight information. The power transmission device 10 radiates the power feeding radio wave 200 toward each of destinations of the power reception devices 20 in the order of the index T0, the index T1, and the index T2.

The power reception device 20 converts the received power feeding radio wave 200 into a direct current, and charges the power reception device 20 using the direct current. The power reception device 20 operates with the charged power and performs wireless communication with a wireless communication device 50. The power reception device 20 collects information and provides the collected information to the wireless communication device 50.

For example, when the moving device 30 rotates (moves) the rotation body 31 at a plurality of different speeds such as low-speed rotation and high-speed rotation, if the power transmission device 10 controls the directivity of the power feeding radio wave in accordance with the regulation signal 100 from the power reception device 20, causing the power feeding radio wave 200 to follow the power reception device 20 is difficult. Therefore, the power transmission device 10 according to an embodiment provides a technique capable of transmitting the power feeding radio wave 200 by following the movement of the power reception device 20 moved by the moving device 30.

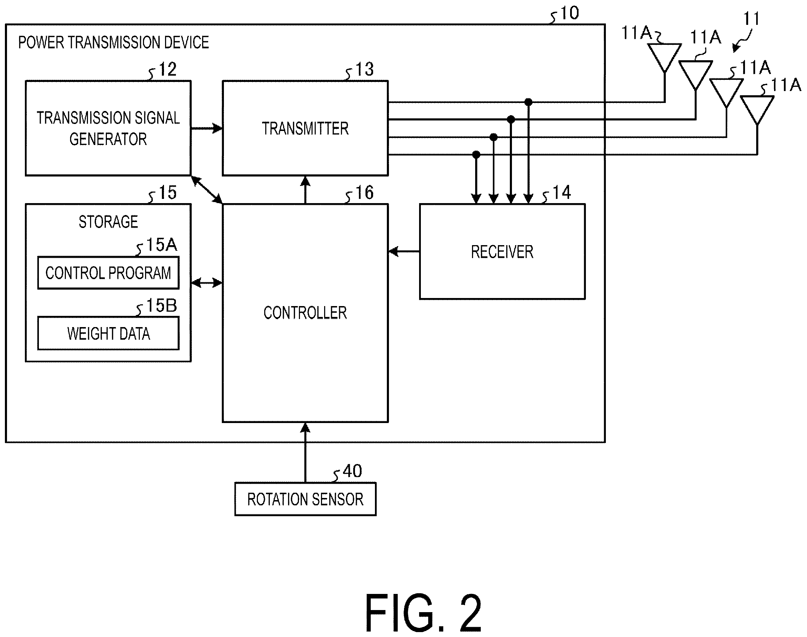

FIG. 2 is a diagram illustrating an example of a configuration of the power transmission device 10 according to an embodiment. As illustrated in FIG. 2, the power transmission device 10 includes the antenna 11, a transmission signal generator 12, a transmitter 13, a receiver 14, a storage 15, and a controller 16. The controller 16 is electrically connected to the transmission signal generator 12, the transmitter 13, the receiver 14, the storage 15, and the like. In the present embodiment, the power transmission device 10 will be described in a case where the antenna 11 includes four antenna elements 11A, but the number of the antenna elements 11A is not limited thereto.

The antenna 11 is capable of directivity control (beam forming). The antenna 11 is an antenna array including a plurality of antenna elements 11A. The antenna 11 is configured such that, for example, each of the plurality of antenna elements 11A radiates the same radio wave, and by adjusting phases and power intensities of the respective antenna elements, radio waves can be strengthened in a specific direction, and can be canceled and weakened in another direction. The antenna 11 radiates a radio wave including a transmission signal and receives a radio wave including a signal from the power reception device 20. The antenna 11 supplies the received signal to the receiver 14.

The transmission signal generator 12 generates a transmission signal for power feeding obtained by converting a current to be transmitted to the power reception device 20 into a radio wave. The transmission signal is a signal for transmitting a radio wave capable of supplying power. The transmission signal generator 12 converts a current from a power source into a radio wave of a transmission frequency to generate a transmission signal. The power source includes, for example, a commercial power supply, a DC power supply, and a battery. The transmission signal generator 12 supplies the generated transmission signal to the transmitter 13.

The transmitter 13 is electrically connected to each of the plurality of antenna elements 11A of the antenna 11. The transmitter 13 causes the antenna 11 to radiate a radio wave (power feeding radio wave) or the like including a transmission signal for power feeding. The transmitter 13 applies a weight corresponding to a beam that can be formed by the plurality of antenna elements 11A to cause the plurality of antenna elements 11A to radiate a radio wave in a specific direction. The transmitter 13 applies a weight instructed by the controller 16 to the plurality of antenna elements 11A.

The receiver 14 is electrically connected to each of the plurality of antenna elements 11A of the antenna 11. The receiver 14 extracts a reception signal from a radio wave received from the power reception device 20 via the antenna 11. The reception signal includes, for example, the regulation signal 100 described above. The receiver 14 supplies the extracted reception signal to the controller 16 or the like.

The storage 15 can store a program and data. The storage 15 may include a freely selected non-transitory storage medium such as a semiconductor storage medium and a magnetic storage medium. The storage 15 may include a combination of a storage medium such as a memory card, an optical disk, a magneto-optical disk, or the like and a device for reading a storage medium. The storage 15 may include a storage device used as a temporary storage area such as a RAM.

The storage 15 can store a control program 15A, weight data 15B, and the like. The control program 15A can provide functions for realizing respective processes related to various operations of the power transmission device 10. The control program 15A can provide functions related to wireless power transmission. The weight data 15B includes, for example, data indicating a plurality of weights (weighting coefficients) for adjusting amplitudes and phases of signals radiated from the plurality of antenna elements 11A of the antenna 11 for each of a plurality of directivity patterns. The weight data 15B includes, for example, information such as transmission weight information and reception response vector information. The transmission weight information includes, for example, information indicating a transmission weight calculated when the movement of the moving device 30 includes a speed equal to or less than a predetermined speed. The reception response vector information includes, for example, information indicating a reception response vector (terminal arrival direction) of the power reception device 20 estimated based on the regulation signal 100. An example of the weight data 15B will be described below.

The controller 16 includes one or more arithmetic devices. Examples of the arithmetic device include, but are not limited to, a central processing unit (CPU), a system-on-a-chip (SoC), a micro control unit (MCU), a field-programmable gate array (FPGA), and a coprocessor. The controller 16 realizes processes related to various operations of the power transmission device 10 by causing the arithmetic device to execute the control program 15A. The controller 16 may realize at least a part of the functions provided by the control program 15A by dedicated integrated circuit (IC).

The controller 16 performs antenna directivity control by executing the control program 15A. For example, the controller 16 stores the calculated transmission weight information in the storage 15 when the movement of the moving device 30 includes a speed equal to or less than a predetermined speed. When the moving device 30 is moving at a speed higher than a predetermined speed, the controller 16 selects the transmission weight information of the power feeding radio wave based on the stored transmission weight information. The controller 16 stores the reception response vector information of the regulation signal 100 received when the movement of the power reception device 20 includes a speed equal to or less than the predetermined speed in the storage 15. The controller 16 generates transmission weight information from the reception response vector of the regulation signal 100. As a method of generating transmission weight information, for example, a zero forcing (ZF) algorithm, a minimum mean square error (MMSE) algorithm, or the like used in MIMO can be used. When the power reception device 20 is moving at a speed higher than a predetermined speed, the controller 16 selects the transmission weight information of the power feeding radio wave based on the transmission weight information and the reception response vector of the received regulation signal 100. The controller 16 controls the directivity of the power feeding radio wave based on the transmission weight information.

The functional configuration example of the power transmission device 10 according to the present embodiment has been described above. Note that the above-described configuration described using FIG. 2 is merely an example, and the functional configuration of the power transmission device 10 according to the present embodiment is not limited to the example. In the present embodiment, the functional configuration of the power transmission device 10 can be flexibly changed in accordance with specifications and operations.

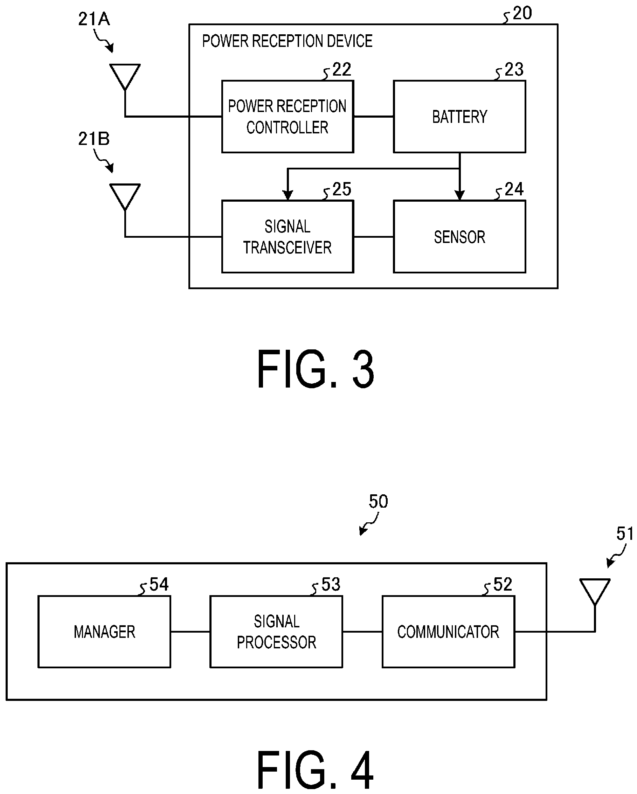

FIG. 3 is a diagram illustrating an example of a configuration of the power reception device 20 according to an embodiment. As illustrated in FIG. 3, the power reception device 20 includes antennas 21A and 21B, a power reception controller 22, a battery 23, a sensor 24, and a signal transceiver 25.

The antenna 21A is electrically connected to the power reception controller 22. For example, the antenna 21A radiates a radio wave including the regulation signal 100 and receives a radio wave including a signal from the power transmission device 10. The antenna 21A supplies the received radio wave to the power reception controller 22.

The antenna 21B is electrically connected to the signal transceiver 25. The antenna 21B transmits sensor data including information detected by the sensor 24 in accordance with the control of the signal transceiver 25, for example. The antenna 21B supplies a signal received from the wireless communication device 50 to the signal transceiver 25.

The power reception controller 22 generates the regulation signal 100 and causes the antenna 21 to radiate a radio wave including the regulation signal 100. The power reception controller 22 transmits the regulation signal 100 at a predetermined timing. The predetermined timing includes, for example, a timing at which a certain period of time has elapsed, a designated timing, and the like. The power reception controller 22 may generate a signal different from the regulation signal 100.

The power reception controller 22 is electrically connected to the battery 23. The power reception controller 22 includes, for example, a wireless power reception device. The power reception controller 22 converts the radio wave received by the antenna 21A into a direct current, and performs control to charge the battery 23 using the direct current. The power reception controller 22 converts the radio wave into a direct current using, for example, a known rectifier circuit.

The battery 23 includes a rechargeable cell. The battery 23 includes, for example, a battery corresponding to Qi (international standard for wireless power feeding). The battery 23 can supply the stored power to each unit or the like that requires power in the power reception device 20. The battery 23 is electrically connected to the sensor 24 and the signal transceiver 25 and supplies power to the sensor 24, the signal transceiver 25, and the like.

The sensor 24 includes a plurality of sensors. For example, the plurality of sensors include sensors such as an acceleration sensor, a direction sensor, and a gyro sensor. The acceleration sensor can detect the direction and magnitude of acceleration acting on the moving device 30. The direction sensor can detect a direction of geomagnetism. The gyro sensor can detect an angle and an angular velocity of the moving device 30. The sensor 24 is electrically connected to the signal transceiver 25. The sensor 24 supplies information indicating a detection result to the signal transceiver 25.

The signal transceiver 25 includes, for example, a wireless communication device and a control device. The signal transceiver 25 causes the antenna 21B to radiate a radio wave including a sensor signal indicating a detection result detected by the sensor 24. The signal transceiver 25 performs data processing, data acquisition, data management, and the like based on a signal received via the antenna 21B.

The functional configuration example of the power reception device 20 according to the present embodiment has been described above. Note that the above-described configuration described using FIG. 3 is merely an example, and the functional configuration of the power reception device 20 according to the present embodiment is not limited to the example. In the present embodiment, the functional configuration of the power reception device 20 can be flexibly changed in accordance with specifications and operations.

FIG. 4 is a diagram illustrating an example of the configuration of the wireless communication device 50 according to an embodiment. As illustrated in FIG. 4, the wireless communication device 50 includes an antenna 51, a communicator 52, a signal processor 53, and a management unit 54.

The antenna 51 is electrically connected to the communicator 52. The antenna 51 receives, for example, a radio wave from the power reception device 20 and radiates a radio wave including a signal from the signal processor 53. The antenna 51 supplies the received radio wave to the communicator 52.

The communicator 52 extracts a reception signal from the radio wave received from the power reception device 20 via the antenna 51. The reception signal includes, for example, the above-described sensor signal. The communicator 52 is electrically connected to the signal processor 53. The communicator 52 supplies the extracted reception signal to the signal processor 53.

The signal processor 53 is electrically connected to the management unit 54. The signal processor 53 extracts a sensor signal from the reception signal and supplies sensor information indicated by the sensor signal to the management unit 54.

The management unit 54 manages the sensor information in association with the power reception device 20. For example, the management unit 54 constructs a database based on the sensor information, and provides various types of information based on the database. For example, the management unit 54 provides the sensor information received from the power reception device 20 to a server device via Internet.

The functional configuration example of the wireless communication device 50 according to the present embodiment has been described above. Note that the above-described configuration described using FIG. 4 is merely an example, and the functional configuration of the wireless communication device 50 according to the present embodiment is not limited to the example. In the present embodiment, the functional configuration of the wireless communication device 50 can be flexibly changed in accordance with specifications and operations.

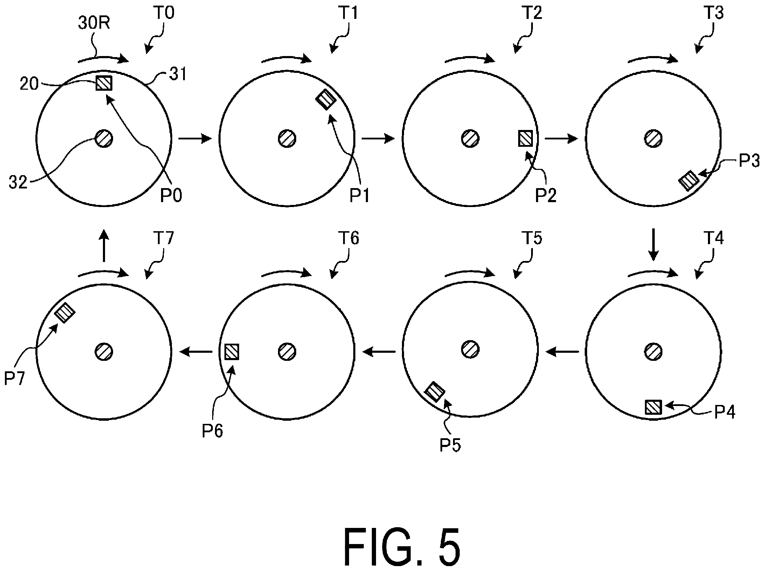

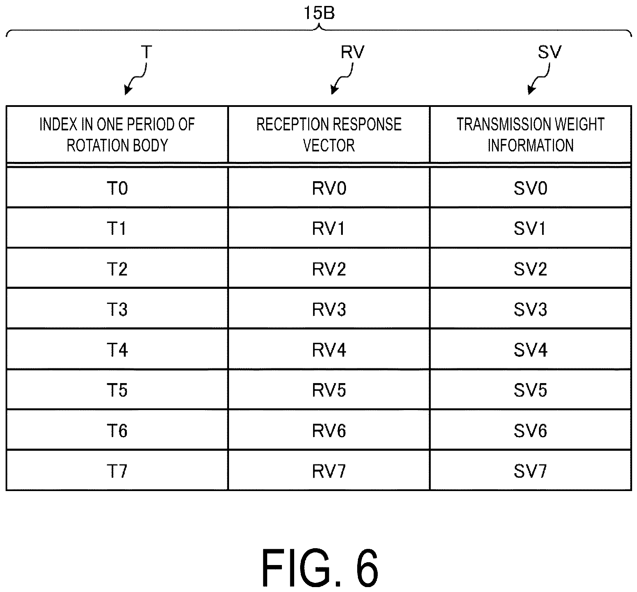

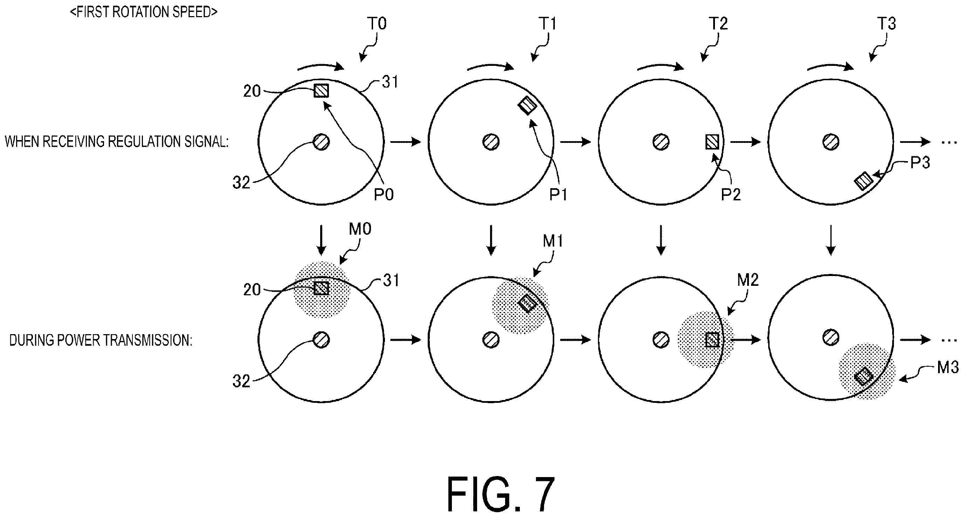

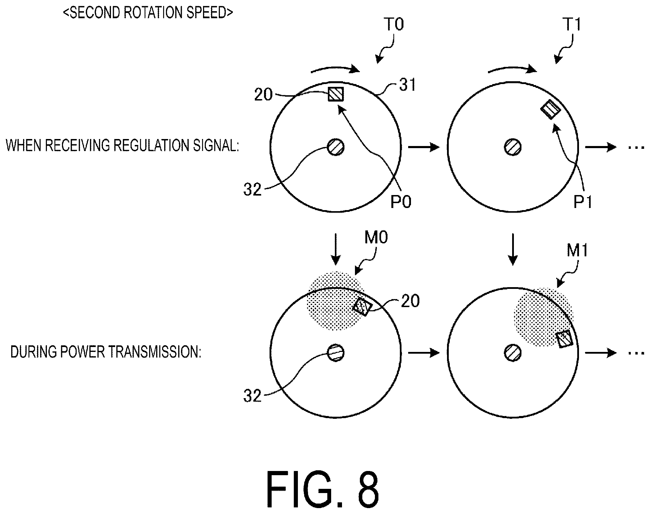

FIG. 5 is a diagram for illustrating an example of movement of the power reception device 20 by the rotation body 31 according to an embodiment. FIG. 6 is a diagram illustrating an example of the weight data 15B indicating a relationship between the reception response vector and transmission weight information. FIG. 7 is a diagram illustrating an example of the weight data 15B corresponding to a relationship between a position of the power reception device 20 rotating at a first rotation speed and a power distribution during power transmission. FIG. 8 is a diagram for illustrating an example of the weight data 15B corresponding to a relationship between a position of the power reception device 20 rotating at a second rotation speed and a power distribution during power transmission.

As illustrated in FIG. 5, the moving device 30 moves the power reception device 20 along a circumference of the rotation body 31 by rotating the rotation body 31 in a rotation direction 30R while switching between the first rotation speed and the second rotation speed with the rotation axis 32 as the center of rotation. The first rotation speed is a rotation speed lower than the predetermined speed. The first rotation speed is a rotation speed lower than the second rotation speed. The first rotation speed is set to a rotation speed at which the power transmission device 10 can estimate the reception response vector, the transmission weight, and the like. The second rotation speed is set to a rotation speed at which it is difficult for the power transmission device 10 to estimate or the power transmission device 10 cannot estimate the reception response vector, the transmission weight, and the like. The first rotation speed and the second rotation speed can be arbitrarily set to different rotation speeds.

In the example illustrated in FIG. 5, at the first rotation speed of the moving device 30, the power reception device 20 is located at positions P0, P1, P2, P3, P4, P5, P6, and P7 at respective indexes (time) T0, T1, T2, T3, T4, T5, T6, and T7 in one period (one rotation). The positions P0, P 1, P2, P3, P4, P5, P6, and P7 indicate movement trajectories of the power reception device 20 in the rotation body 31.

When the moving device 30 rotationally moves the power reception device 20 at the first rotation speed, the power transmission device 10 estimates the reception response vector based on the regulation signal 100 received from the power reception device 20. The power transmission device 10 estimates the reception response vectors RV0, RV1, RV2, RV3, RV4, RV5, RV6, and RV7 corresponding to the respective indexes T0, T1, T2, T3, T4, T5, T6, and T7. Based on the estimated reception response vectors RV0, RV1, RV2, RV3, RV4, RV5, RV6, and RV7, the power transmission device 10 estimates transmission weight information SV0, SV1, SV2, SV3, SV4, SV5, SV6, and SV7 corresponding to the plurality of antenna elements 11A. The power transmission device 10 estimates the transmission weight information using, for example, a known estimation method of estimating a transmission weight from a pilot signal. The power transmission device 10 can estimate the transmission weight information SV0, SV1, SV2, SV3, SV4, SV5, SV6, and SV7 in consideration of time lag from the power transmission device 10 to the power reception device 20. For example, the power transmission device 10 estimates the transmission weight information SV0, SV1, SV2, SV3, SV4, SV5, SV6, and SV7 based on information such as a distance from the power transmission device 10 to the power reception device 20, the rotation speed of the rotation body 31, and a distance from the rotation axis 32 to the power reception device 20.

In the example illustrated in FIG. 6, the power transmission device 10 stores the weight data 15B in which the index T, the reception response vector RV, and the transmission weight information SV are associated with each other in the storage 15. The index T indicates a different index (time) in one period, and is a value obtained by equally dividing one period by eight. For example, when the rotation speed is constant, the regulation signal 100 at the same index T is received a plurality of times. Therefore, the power transmission device 10 can update the reception response vector RV and the transmission weight vector by averaging or the like. When the number of regulation signals 100 for one period is smaller than the predetermined number of indexes T, the power transmission device 10 may fill the insufficient T by interpolation. The reception response vector SV is the above-described reception response vector (a vector obtained by vectorizing the channel characteristics of propagation paths calculated at the time of reception by the plurality of antenna elements 11A by arranging the channel characteristics as many as the number of the plurality of antenna elements 11A).

The power transmission device 10 prepares the weight data 15B for one period as a table and sequentially updates the weight data 15B. The amount of data required for one period is determined in consideration of a beam width of the transmission antenna directivity. For example, a large amount of the weight data 15B is required for a thin beam, and a small amount of the weight data 15B is required for a thick beam.

As illustrated in FIG. 7, when the power reception device 20 is located at the position P0 of the index T0 when the power transmission device 10 receives the regulation signal 100, the transmission weight information SV0 of the weight data 15B is set such that a distribution M0 of the power feeding radio wave of the power transmission device 10 is a region of the rotation body 31 including the power reception device 20. When the power reception device 20 is located at the position P1 of the index T1 when the power transmission device 10 receives the regulation signal 100, the transmission weight information SV1 of the weight data 15B is set such that a distribution M1 of the power feeding radio wave of the power transmission device 10 is a region of the rotation body 31 including the power reception device 20. When the power reception device 20 is located at the position P2 of the index T2 when the power transmission device 10 receives the regulation signal 100, the transmission weight information SV2 of the weight data 15B is set such that a distribution M2 of the power feeding radio wave of the power transmission device 10 is a region of the rotation body 31 including the power reception device 20. When the power reception device 20 is located at the position P3 of the index T3 when the power transmission device 10 receives the regulation signal 100, the transmission weight information SV3 of the weight data 15B is set such that a distribution M3 of the power feeding radio wave of the power transmission device 10 is a region of the rotation body 31 including the power reception device 20. In the weight data 15B, the transmission weight information SV4, SV5, SV6, and SV7 is set in the same or similar manner for the other indexes T4, T5, T6, and T7.

When the moving device 30 rotates the power reception device 20 at the second rotation speed, when the power transmission device 10 uses the weight data 15B corresponding to the first rotation speed lower than the second rotation speed, the region of the rotation body 31 is shifted from the position of the power reception device 20 in a delay direction, as the distributions M0 and M1 of the power feeding radio waves transmitted by the power transmission device 10 illustrated in FIG. 8. Therefore, when the moving device 30 rotates the power reception device 20 at the second rotation speed, the power transmission device 10 calculates the reception response vector from the received regulation signal 100, and selects the transmission weight information SV from the weight data 15B in consideration of a time lag until power transmission. Thus, the power transmission device 10 can wirelessly supply stable power at the first rotation speed and the second rotation speed using the weight data 15B corresponding to the first rotation speed.

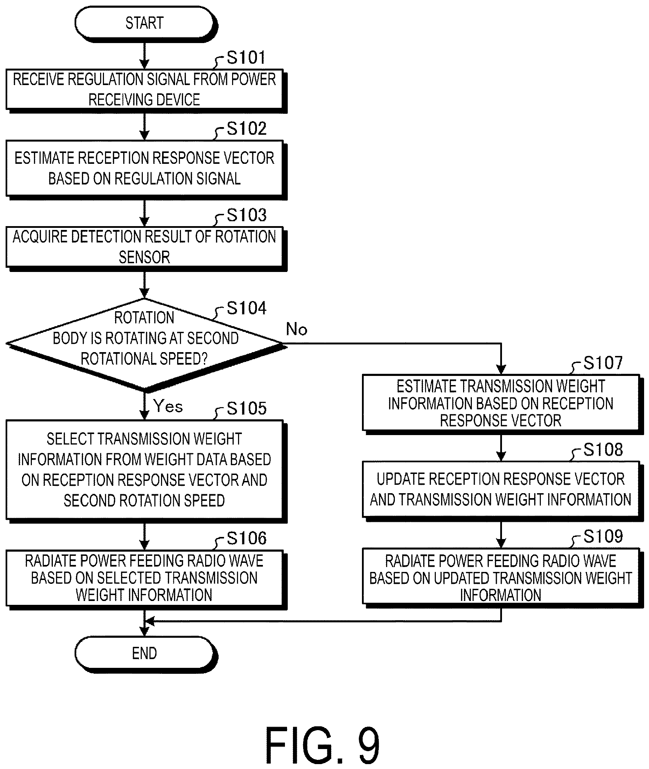

FIG. 9 is a flowchart illustrating an example of a processing procedure executed by the power transmission device 10 according to an embodiment. The processing procedure illustrated in FIG. 9 is implemented by the controller 16 of the power transmission device 10 executing the control program 15A. For example, when a radio wave is received by the antenna 11, the processing procedure illustrated in FIG. 9 is repeatedly executed by the controller 16 at the timing of receiving a radio wave or the like.

As illustrated in FIG. 9, the controller 16 of the power transmission device 10 receives the regulation signal 100 from the power reception device 20 (step S101). For example, the controller 16 acquires the regulation signal 100 from the radio wave received by the antenna 11. Upon completion of the processing in step S101, the controller 16 causes the processing to proceed to step S102.

The controller 16 estimates the reception response vector RV based on the regulation signal 100 (step S102). For example, the controller 16 gives the regulation signal 100 received by each of the plurality of antenna elements 11A to a known reception weight vector calculator, thereby estimating the virtual reception response vector RV at the time of transmission. When storing the estimated reception response vector RV in the storage 15, the controller 16 causes the processing to proceed to step S103.

The controller 16 acquires a detection result of the rotation sensor 40 (step S103). For example, the controller 16 acquires the latest detection result of the rotation sensor 40, and stores the detection result in the storage 15 in association with the reception response vector RV. Upon completion of the processing in step S103, the controller 16 causes the processing to proceed to step S104.

The controller 16 determines whether the rotation body 31 rotates at the second rotation speed (step S104). For example, when the rotation speed of the detection result acquired in step S103 is within a determination speed range, the controller 16 determines that the rotation body 31 rotates at the second rotation speed. For example, when the rotation speed of the detection result acquired in step S 103 is lower than the determination speed range, the controller 16 determines that the rotation body 31 does not rotate at the second rotation speed.

When determining that the rotation body 31 rotates at the second rotation speed (Yes in step S104), the controller 16 causes the processing to proceed to step S105. The controller 16 selects the transmission weight information SV from the weight data 15B based on the reception response vector RV and the second rotation speed (step S105). For example, the controller 16 obtains a time lag from the second rotation speed to the power transmission, and selects the transmission weight information SV from the weight data 15B of the first rotation speed. For example, the controller 16 selects the transmission weight information SV of the index T shifted from the index T corresponding to the reception response vector by the time lag from the weight data 15B. Upon completion of the processing in step S105, the controller 16 causes the processing to proceed to step S106.

The controller 16 radiates the power feeding radio wave based on the selected transmission weight information SV (step S106). For example, the controller 16 sets the transmission weight indicated by the selected transmission weight information SV in the transmitter 13, and causes the power feeding radio wave including the transmission signal generated by the transmission signal generator 12 to be radiated from the antenna 11. As a result, the controller 16 radiates the power feeding radio wave toward the power reception device 20 that rotationally moves at the second rotation speed. Upon completion of the processing in step S106, the controller 16 terminates the processing procedure illustrated in FIG. 9.

When determining that the rotation body 31 does not rotate at the second rotation speed (Yes in step S104), the controller 16 causes the processing to proceed to step S107 since the rotation body 31 rotates at the first rotation speed. The controller 16 estimates the transmission weight information SV based on the reception response vector RV (step S107). For example, the controller 16 estimates the index T from the reception response vector RV, obtains information such as the distance from the control device 16 to the power reception device 20 corresponding to the index T, the rotation speed of the rotation body 31, and the distance from the rotation axis 32 to the power reception device 20, and estimates the transmission weight information SV based on these pieces of information. Upon completion of the processing in step S107, the controller 16 causes the processing to proceed to step S108.

The controller 16 updates the reception response vector RV and the transmission weight information SV (step S108). For example, the controller 16 updates the estimated reception response vector RV and transmission weight information SV of the weight data 15B corresponding to the estimated index T to the reception response vector RV and transmission weight information SV estimated in the current processing. Upon completion of the processing in step S108, the controller 16 causes the processing to proceed to step S109.

The controller 16 radiates the power feeding radio wave based on the updated transmission weight information SV (step S109). For example, the controller 16 sets the transmission weight indicated by the selected transmission weight information SV in the transmitter 13, and causes the power feeding radio wave including the transmission signal generated by the transmission signal generator 12 to be radiated from the antenna 11. As a result, the controller 16 radiates the power feeding radio wave toward the power reception device 20 that rotationally moves at the first rotation speed. Upon completion of the processing in step S109, the controller 16 terminates the processing procedure illustrated in FIG. 9.

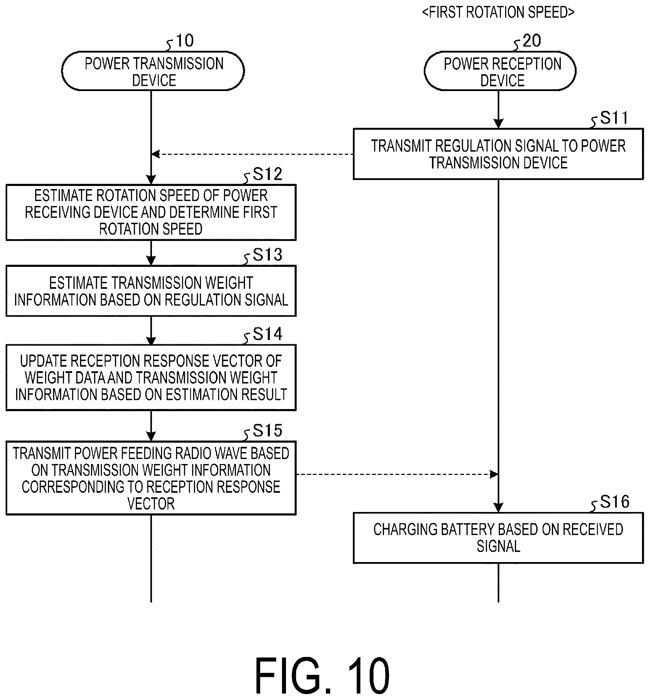

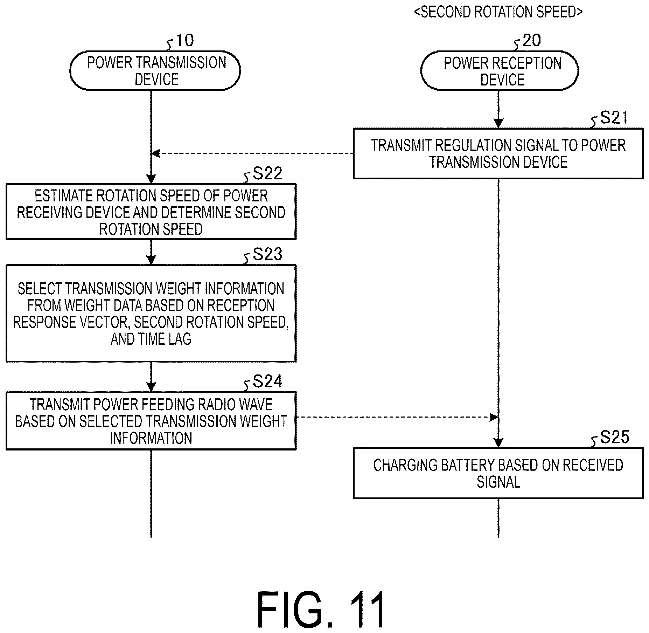

FIG. 10 is a diagram illustrating an example of a sequence of the system 1 according to an embodiment. FIG. 11 is a diagram illustrating another example of an operation of the system 1 according to an embodiment. In FIG. 10, it is assumed that the power reception device 20 is rotationally moved at the first rotation speed by the moving device 30. In FIG. 11, it is assumed that the power reception device 20 is rotationally moved at the second rotation speed by the moving device 30.

As illustrated in FIG. 10, the power reception device 20 transmits the regulation signal 100 to the power transmission device 10 in accordance with the transmission period of the wireless power feeding or the like (step S11). As a result, the power reception device 20 radiates the radio wave including the regulation signal 100 from the antenna 21 in a state of rotationally moving at the first rotation speed.

The power transmission device 10 estimates the rotation speed of the power reception device 20 based on information from the rotation sensor 40 connected by wire, and determines the rotation speed as the first rotation speed (step S12). The power transmission device 10 estimates the transmission weight information based on the regulation signal 100 received via the antenna 11 (step S13). The power transmission device 10 updates the reception response vector RV and the transmission weight information SV of the weight data 15B based on the estimation result (step S14). The power transmission device 10 transmits the power feeding radio wave based on the transmission weight information SV corresponding to the reception response vector RV (step S15). As a result, the power transmission device 10 radiates the power feeding radio wave from the antenna 11 toward the power reception device 20 that is rotationally moving at the first rotation speed.

The power reception device 20 charges the battery 23 based on the received signal (step S16). For example, the power reception device 20 converts the received signal into a direct current using a conversion circuit or the like, and charges the battery 23 using the direct current.

The moving device 30 switches the rotation speed from the first rotation speed to the second rotation speed and continues the rotational movement of the power reception device 20.

As illustrated in FIG. 11, the power reception device 20 transmits the regulation signal 100 to the power transmission device 10 in accordance with the transmission period or the like (step S21). As a result, the power reception device 20 radiates the radio wave including the regulation signal 100 from the antenna 21 in a state of rotationally moving at the second rotation speed.

The power transmission device 10 estimates the rotation speed of the power reception device 20 based on information from the rotation sensor 40 connected by wire, and determines the rotation speed as the second rotation speed (step S22). The power transmission device 10 selects the transmission weight information SV from the weight data 15B based on the reception response vector RV received via the antenna 11, the second rotation speed, and the time lag (step S23). The power transmission device 10 transmits the power feeding radio wave based on the selected transmission weight information SV (step S24). As a result, the power transmission device 10 radiates the power feeding radio wave from the antenna 11 toward the power reception device 20 that is rotationally moving at the second rotation speed.

The power reception device 20 charges the battery 23 based on the received signal (step S25). As a result, the power reception device 20 can charge the battery 23 with the power feeding radio wave from the power transmission device 10 even when the power reception device 20 is rotationally moving at the second rotation speed.

As described above, in the system 1, the power reception device 20 is used in a state of being rotated by the moving device 30. In this case, when receiving the regulation signal 100 from the rotating power reception device 20, the power transmission device 10 can select the transmission weight information of the power feeding radio wave according to the rotation speed. As a result, the power transmission device 10 can control the directivity of the power feeding radio wave using the transmission weight information corresponding to a moving state of the power reception device 20, and thus can cause the power feeding radio wave to follow the moving power reception device 20. As a result, the power transmission device 10 can improve power feeding efficiency to the moving power reception device 20 in wireless power transmission.

The power transmission device 10 stores the reception response vector information of the regulation signal 100 received when the movement of the power reception device 20 includes a speed equal to or less than a predetermined speed. When the power reception device 20 is moving at a speed higher than a predetermined speed, the power transmission device 10 selects the transmission weight information of the power feeding radio wave based on the transmission weight information and the reception response vector of the received regulation signal 100. As a result, when the power reception device 20 is moving at a speed higher than the predetermined speed, the power transmission device 10 uses the reception response vector and the transmission weight information at a speed equal to or less than the predetermined speed, thereby reducing a processing load. As a result, the power transmission device 10 can cause the power feeding radio wave to follow the moving power reception device 20, and thus can further improve the power feeding efficiency.

The power transmission device 10 can include, in the transmission weight information, information calculated based on the time lag until the power transmission. As a result, the power transmission device 10 can cause the power feeding radio wave to more accurately follow the moving power reception device 20 by taking into account the time lag until the power transmission.

When the movement of the power reception device 20 is a rotational motion, the power transmission device 10 can radiate the power feeding radio wave toward the power reception device 20 in consideration of the rotation direction of the power reception device 20. As a result, the power transmission device 10 can cause the power feeding radio wave to more accurately follow the moving power reception device 20, and thus can further improve the power feeding efficiency.

The power transmission device 10 can use the reception response vector obtained by arranging channel specifications of propagation paths calculated when reception is performed by a plurality of antennas for the plurality of antennas and vectorizing the channel specifications. As a result, the power transmission device 10 can radiate the power feeding radio wave in consideration of the movement speed and a propagation environment of the power reception device 20 by using a different vector depending on the direction in which the regulation signal 100 arrives and the reflection of the radio wave.

In the above-described system 1, the power transmission device 10 obtains information about the rotation speed from the rotation sensor 40 connected by wire, but the system 1 is not limited thereto. For example, when the power reception device 20 continues to rotationally move, a Doppler shift corresponding to the movement speed of the power reception device 20 occurs in the regulation signal 100 received by the power transmission device 10. As a result, the power transmission device 10 can estimate the rotation speed of the power reception device 20 by estimating a frequency offset due to the Doppler shift, and thus does not need to use the rotation sensor 40.

In the above-described system 1, a case is described where the power reception device 20 rotationally moves, but the system 1 is not limited thereto. In the system 1, for example, the movement of the power reception device 20 may include a periodic motion. The periodic motion includes, for example, a reciprocating movement of the power reception device 20 attached to a cutting tool or the like. In this case, the power transmission device 10 may control the directivity of the power feeding radio wave so as to follow the power reception device 20 in accordance with the speed of the periodically moving power reception device 20.

In the above-described embodiment, a case is described where the power transmission device 10 is an electronic device in the system 1, but the embodiment is not limited thereto. The electronic device may be realized by, for example, a control device controlling a power feeding device capable of radiating a power feeding radio wave, a computer incorporated in the power feeding device, or the like. A case is described where the system 1 is a wireless power transmission system, but the system 1 is not limited thereto. For example, the system 1 can be applied to a system or the like performing wireless communication in a radio wave propagation environment.

Embodiments have been described in order to fully and clearly disclose the technology according to the appended claims. However, the appended claims are not to be limited to the embodiments described above and may be configured to embody all variations and alternative configurations that those skilled in the art may make within the underlying matter set forth herein. A person skilled in the art can easily make various variations or modifications of the present disclosure based on the present disclosure. Accordingly, these variations and modifications are included within the scope of the present disclosure. For example, in each embodiment, each functional unit, each means, each step, and the like can be added to another embodiment or replaced with each functional unit, each means, each step, and the like of another embodiment so as not to be logically inconsistent. In each embodiment, a plurality of functional units, means, steps, and the like can be combined into one or divided. Each of the embodiments of the present disclosure described above is not limited to being implemented faithfully to each of the embodiments described above, and can be implemented by appropriately combining each feature or omitting a part thereof.

### REFERENCE SIGNS

1 System
10 Power transmission device
11 Antenna
11A Antenna element
12 Transmission signal generator
13 Transmitter
14 Receiver
15 Storage
15A Control program
15B Weight data
16 Controller
20 Power reception device
21A, 21B Antenna
22 Power reception controller
23 Battery
24 Sensor
25 Signal transceiver
30 Moving device
31 Rotation body
32 Rotation axis
40 Rotation sensor
50 Wireless communication device
200 Power feeding radio wave
600 Closed space

## Claims

1. An electronic device, comprising:
a transmitter configured to transmit a power feeding radio wave;
a receiver configured to receive a regulation signal included in a radio wave transmitted from a power reception device moving relative to the receiver;
a storage configured to store transmission weight information calculated when a movement of the power reception device includes a speed equal to or less than a predetermined speed; and
a controller configured to select, when the power reception device is moving at a speed higher than the predetermined speed, the transmission weight information of the power feeding radio wave based on the transmission weight information that is stored.

2. The electronic device according to claim 1, wherein
the storage is configured to store reception response vector information of the regulation signal received when the movement of the power reception device includes a speed equal to or less than the predetermined speed, and
the controller is configured to select, when the power reception device is moving at a speed higher than the predetermined speed, the transmission weight information of the power feeding radio wave based on the transmission weight information and the reception response vector information of the regulation signal that is received.

3. The electronic device according to claim 1 or 2, wherein the transmission weight information includes information calculated based on a time lag until power transmission.

4. The electronic device according to any one of claims 1 to 3, wherein the movement of the power reception device includes a rotational motion.

5. The electronic device according to any one of claims 1 to 4, wherein the movement of the power reception device includes a periodic motion.

6. The electronic device according to claim 2, wherein the reception response vector information is obtained by arranging channel specifications of propagation paths calculated when reception is performed by a plurality of antennas for the plurality of antennas and vectorizing the channel specifications.

7. The electronic device according to any one of claims 1 to 6, wherein the controller is configured to estimate the movement speed of the power reception device based on a Doppler shift calculated from the regulation signal.

8. A power transmission system, comprising:
an electronic device; and
a power reception device configured to be moved by a moving device and fed with electrical power by a power feeding radio wave received from the electronic device, wherein
the electronic device comprises:
a transmitter configured to transmit the power feeding radio wave;
a receiver configured to receive a regulation signal included in a radio wave transmitted from the power reception device configured to move relative to the receiver;
a storage configured to store transmission weight information calculated when a movement of the moving device includes a speed equal to or less than a predetermined speed; and
a controller configured to select, when the power reception device is moving at a speed higher than the predetermined speed, the transmission weight information of the power feeding radio wave based on the transmission weight information that is stored, and
the power reception device comprises:
a power reception controller configured to transmit the regulation signal and convert the power feeding radio wave received from the electronic device into electrical power; and
a battery configured to be charged with the electrical power that is converted.

9. A control method executed by an electronic device, the electronic device comprising:
a transmitter configured to transmit a power feeding radio wave; and a receiver configured to receive a regulation signal included in a radio wave transmitted from a moving device moving relative to the receiver,
the electronic device executing:
storing, in a storage, transmission weight information calculated when a movement of the moving device includes a speed equal to or less than a predetermined speed; and
selecting, when the moving device is moving at a speed higher than the predetermined speed, the transmission weight information of the power feeding radio wave based on the transmission weight information that is stored.

10. A control program that causes an electronic device to execute:
storing, in a storage, transmission weight information calculated when a movement of a moving device includes a speed equal to or less than a predetermined speed; and
selecting, when the moving device is moving at a speed greater than the predetermined speed, the transmission weight information of a power feeding radio wave based on the transmission weight information that is stored,
the electronic device comprising:
a transmitter configured to transmit the power feeding radio wave; and
a receiver configured to receive a regulation signal included in a radio wave transmitted from the moving device moving relative to the receiver.
